**Europäisches Patentamt**

**European Patent Office**

**Office européen des brevets**

(19)

(11) **EP 1 467 575 A1**

(12) ## EUROPEAN PATENT APPLICATION

(43) Date of publication:
**13.10.2004 Bulletin 2004/42**

(51) Int Cl.⁷: **H04Q 7/14**

(21) Application number: **04101421.8**

(22) Date of filing: **06.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventor: **Sjöqvist, Peter**<br>**SE-725 91, Västerås (SE)** |
| (30) Priority: **11.04.2003 SE 0301097** | (74) Representative: **Stenborg, Anders Vilhelm et al**<br>**Aros Patent AB,**<br>**P.O. Box 1544**<br>**751 45 Uppsala (SE)** |
| (71) Applicant: **Generic AB**<br>**131 04 Nacka (SE)**<br>Designated Contracting States:<br>**AT BE BG DE DK** | |

(54) **Localization system**

(57)     A method and a system are disclosed for combining a local broadcast communication system and a satellite positioning system, to thereby improve positioning receiver sensitivity by assisted data for the positioning by means of a satellite positioning system. The broadcast communication system generally utilizes an established broadcast communication network, which offers defined groups of base stations. Each such group covers a defined geographic area (100) and is served by at least one satellite receiver device, which observes the closest, at least four orbiting positioning satellites to be used for a position fix within the particular geographic area (100). An item, which is to be traced, when necessary, is equipped with a tracking device in form of a transponder (20) comprising an adapted receiver designed to operate using at least two separate receiver identities of the broadcast communication system for administration of a tracking function of the tracking device. In operation the adapted receiver is passively receiving and memorizing data received within the actual geographic area (100) from at least one base station (35) via one particular devoted receiver identity. At least one or two further receiver identities may also be used for different modes of activation and control of the tracking device.

Fig. 3

**EP 1 467 575 A1**

## Description

TECHNICAL FIELD

The present invention relates to a method and a system for obtaining a faster localization of a subject provided with modern navigational equipment, and more particularly a simple system combining a satellite positioning system and a broadcasting network.

BACKGROUND

Modem technologies offer many different methods of surveillance of, for instance, merchandize, transported goods or even vehicles. The general manner of such surveillance is that whenever the guarded item leaves a defined area an alarm will be triggered. In many cases it is also essential to be able, after such a triggered alarm to be able track the item in a way such that it may easily be recovered.

Such surveillance equipment generally needs some kind of communication system to be able to alert such a system or shut it off after an alarm has been initiated. There are several general systems available which can serve this purpose. One type of system, which may be used, is of course a mobile telephone system of a standard type. Another candidate system used is a two-way paging system for instance disclosed in US 2002/0000930.

A general problem when using such general systems is that modifications of the system itself to suit a particular utilization will be difficult to carry out on a short notice as there are usually many service providers involved, which will have to implement any change of the originally set-up system in order to obtain and maintain compatibility for their users. Therefore such actions would generally need a time period of typically at least one or two years to implement.

For instance a U.S. Patent No. 6,236,836, discloses a generalized paging system which provides a transponder system used in a system for localization of movable objects, e.g. for surveillance of valuable transports and the like. The system is controllable by a radio system and control information may even be sent to the transponder for defining for instance the basic functions of a built-in marker transmitter used for localizing the object. Furthermore, the system may utilize different localization systems, for instance the well-known Global Positioning Satellite system (GPS). The Global Positioning System is able to with a high accuracy present geographic coordinates of such a transponder supplied with a GPS receiver, and the coordinates obtained may be further transferred over a suitable network, e.g. a mobile telephone network like GSM, WCDMA or similar systems for purposes of tracking the transponder. However only positioning by GPS within areas having dense buildings as well as dense forest areas will suffer from high signal attenuation, which is experienced due to the high frequencies utilized by that system. This will deteriorate the possibilities to get an accurate positioning.

Today, systems similar to the one for instance described by U.S. Patent No. 6,236,836 are used, for instance, for surveillance of transports of cases with money to and from banks. Generally armed suitcases are used, which together with an inking device for coloring of the notes if illegally opened also contain one or several anti-theft transponders. If the suitcase is illegally opened by force the transponder or transponders will become active, to assist in immediately finding out where it illegitimately was opened. An essential part of such a surveillance and tracking system, which utilizes for instance the Global Positioning Satellite system, GPS, is that a positioning of such a protected suitcase can be obtained on a short notice as the transponder may be able by itself to tell its position after initiation. Besides, it usually even includes a separate transmitter for a standard direction finding by using a suitable frequency. The direction search is easily performed by means of a helicopter. Such a system, for instance, was recently developed and marketed under the name of C-TRACK by COMTRACK, Uppsala, Sweden.

A desire is to further develop these systems e. g. for surveillance regarding their communication ability. Therefore an object of the present invention is to offer an extended communication, which in an easy way, merely by software, will able to be adapted to any already existing paging system standard, while all major hardware changes should then be found in the surveillance device itself.

DISCLOSURE OF THE INVENTION

A method and a system are disclosed for combining a one-way local communication system and a satellite positioning system, such as the GPS, to thereby obtain an improved positioning receiver sensitivity by utilizing the so called Assisted Global Positioning. The one-way communication system generally can utilize an established pager network, which is further organized into defined groups of base stations. Each such group is covering a defined geographic area and is served by at least one GPS receiver, which observes the closest, at least four necessary orbiting satellites to be used for a position fix within the particular geographic are. An item, which should be able to be traced, is equipped with a tracking device in form of a transponder comprising an adapted receiver designed to operate using at least two separate receiver identity of a paging system for administration of a tracking function of the tracking device. In operation the adapted receiver is passively receiving and memorizing data received within the actual geographic area from at least one base station via one particular devoted receiver identity. At least two or more receiver identities are then used for different modes of activation and control of the tracking device.

The present method and system implies only minor software add-on for the established broadcast network, while all necessary hardware will be housed by for instance the transponder of the tracking system. Furthermore the add-on software will not act on compatibility of general broadcast receivers for the established broadcast system as the added functionality system uses in all senses the standardized protocol for the particular broadcast system for this additional function.

A method and a system for such a combined system are defined by the independent claims 1 and 7 of this application.

## BRIEF DESCRIPTION OF THE DRAWINGS

The invention, together with further objects and advantages thereof, may best be understood by making reference to the following description taken together with the accompanying drawings, in which:

FIG. 1     demonstrates in a simplified block diagram a transponder device operating according to the present method;

FIG. 2     demonstrates a broadcast system within a defined geographic area containing in this case five base station for the broadcast network, which is used for assisting a global positioning of a surveillance transponder by keeping track of current available satellites for the passive transponder of the surveillance system; and

FIG. 3     demonstrates another general embodiment of the broadcast system in accordance with the method and system of the present invention.

## DETAILED DESCRIPTION

### General technical background

The US Department of Defense built the elaborate Global Positioning System, GPS, for obtaining locations virtually anywhere on the Earth. 24 NAVSTAR satellites are encircling the Earth every 12 hours, all with different orbits spreading them out over the globe. The satellites are emitting radio signals that contain information about their positions during their orbits. The first set of satellites was launched between 1978 and 1985. A US Patent No. 4,445,118 from 1984 describes all the basics of the system. Receivers near the surface of the planet will receive these signals and calculate their position relative to these satellites and thereby producing a position generally given as geographic latitude and longitude.

With simultaneous data signals received from at least four satellites a very accurate position can be calculated under ideal conditions. Errors can be caused by degradation applied to the satellite signal by the US Department of Defense administering the satellites.

This has been referred to as SA, (Selective Availability), but was generally removed in connection to and after the Gulf War. Another source of error is signal delay by the ionosphere. However positioning can be calculated to within 10 to 20 meters in most cases.

The GPS receiver picks up signals from four satellites and measures the time it took for those signals to arrive. From this timing information the distance between the receiver and each satellite can be calculated. Ephemeris data from each satellite provide the satellite's X, Y, and Z positions. The range R, is the receiver measurement made by calculating the time it took for the satellite signal to reach the receiver. The user position (Ux, Uy, Uz) and a clock bias, Cb, can then be calculated by solving the equation system:

$$(X1\text{-}Ux)^2 + (Y1\text{-}Uy)^2 + (Z1\text{-}Uz)^2 = (R1\text{-}Cb)^2$$

$$(X2\text{-}Ux)^2 + (Y2\text{-}Uy)^2 + (Z2\text{-}Uz)^2 = (R2\text{-}Cb)^2$$

$$(X3\text{-}Ux)^2 + (Y3\text{-}Uy)^2 + (Z3\text{-}Uz)^2 = (R3\text{-}Cb)^2$$

$$(X4\text{-}Ux)^2 + (Y4\text{-}Uy)^2 + (Z4\text{-}Uz)^2 = (R4\text{-}Cb)^2$$

Each one of the satellites transmits a set of signals using spread spectrum technology, which enables low-powered satellites to produce signals being possible to detect at very low levels. The carrier signal is modulated by a unique coding sequence, which has the effect of spreading the frequency spectrum of the signal. A GPS receiver searches the spectrum looking for a match and the signal can then be "unspread" and decoded. Each satellite using different coding sequences results in that the signals can share the spectrum without interfering with any of the others.

Non-restricted GPS signals are for instance transmitted at 1.575 GHz. Such microwave signals are easily blocked by steel and concrete structures, and are attenuated even by passing trees and leaves. To ensure further proper signal detection the receiver must provide sensitivity that exceeds the current standard.

A standard GPS receiver takes one or two minutes to search for and acquire the strongest satellites. At the same time the receiver cannot acquire satellites if the signals are much attenuated from the outdoor minimum of -130dBm. An approach trying to improve the GPS localization is generally referred to as Assisted-GPS, or A-GPS. There are several recent publications on this technique, for instance US Patent No. 6,411,892 and US Patent Application Publication 2002/0175856 describing distribution and delivery of GPS satellite telemetry data in a communication link between a central site and a mobile GPS receiver. The central site being coupled to a network of reference satellite receivers, that sends telemetry data from all satellites to the central site. The availability of the satellite telemetry data enhances the mobile receiver's signal reception sensitivity.

The approach to A-GPS is simply to port traditional GPS algorithms to an architecture that supports the use of aiding data. Typical GPS receivers have only two correlators (one early and one late correlator) per channel with which one out of the 1023 possible code delay chips will be searched. To find the signal they must sequentially search all 1023 chips, in each adjacent frequency bin. A-GPS works by giving the receiver a hint of which frequency bins to search, which greatly reduces the frequency/code search space. With this reduced search space an A-GPS receiver has approximately ten-times fewer frequency bins to search. This speeds up the acquisition time, or allows the receiver to dwell for up to ten times longer in each frequency/code bin resulting in for instance in approximately 10dB higher sensitivity.

A Worldwide Reference Network to be deployed has been suggested. This network would then utilize reference stations around the world so that all satellites can be seen at all times by the network. However this is an expensive system and not a simple thing to realize in practice.

The new application according to the present invention is to adopt a paging system or similar to serve as assisting GPS reference as there in many developed countries will be found an already existing broadcasting system like a paging network, which can be able to provide transfer of necessary information. As an illustrative example of a usable network we will here refer to the Swedish Minicall network operating at 169.8000 and 161.4375 MHz, which frequencies are used for a paging service by utilizing the POCSAG code (Post Office Code Standardization Advisory Group code).

Still a further developed satellite positioning system has been suggested by European organizations. That would then form a corresponding satellite positioning system as the present US Global Positioning Satellite System (GPS) in use, but possibly in a future implementation providing even a higher accuracy for the European sector.

The POCSAG code format consists of a preamble and one or more batches of code words. Each batch comprises a 32-bit frame synchronization (FS) code and eight 64-bit address frames of two 32-bit addresses or idle code words each. The frame synchronization code marks the start of the batch of code words. The preamble consists of 576 bits of an alternating 101010 pattern transmitted at a bit rate of 512, 1200, or 2400 bps. The decoder uses the preamble both to determine if the data received is a POCSAG signal and for synchronization with the stream of data.

A batch consists of the FS code followed by the 16 address code words, whereby, in order to maintain the proper batch structure, each frame is filled with two address code words, or two idle code words, or two message code words, or any appropriate combination of the three code word types.

Each POCSAG code word is directly capable of providing at least unique address information (RIC or Capcode) for four different paging sources (Address 1 to Address 4). These addresses are determined by combinations of the values of bits 20 and 21, the source identifier bits.

These general features of broadcast systems and the POCSAG coding makes it a very good candidate for an improved system for A-GPS utilization in accordance with the present development for use, for instance, in connection to tracking and surveillance of valuable goods according to an illustrative embodiment of the present inventive idea. For the paging system just an updating of the system software will be necessary which will not interfere with the standard use of the paging system.

For instance, the C-TRACK device mentioned in the background portion of this description, already utilizes the Minicall system present in Sweden. However other protocols, which allow several unique identity addresses, could also be used. Such an identity address is generally referred to as an RIC or a Capcode. Other possible protocols, for instance, would be the ERMES (Eurpoean RAdio MEssage System), the NEC format (D2/D3), the Motorola GOLAY (GSC) format and METRO format and the Motorola FLEX digital display format, which could serve for a simple broadcast or one-way communication.

There also are available other one-way communication systems which could serve as network utilized instead of the mentioned Minicall system in this context. For instance the DAta Radio Channel DARC, which utilizes a service identity (SID) which could be used in a similar way as the Receiver Identity Code (RIC) used by the POCSAG protocol. Another corresponding system, which could also be utilized, is an extended Digital Audio Broadcast system, DAB, the receivers of which then also being able to be addressed uniquely and using several addresses for a receiver.

Description of an illustrative embodiment of the invention

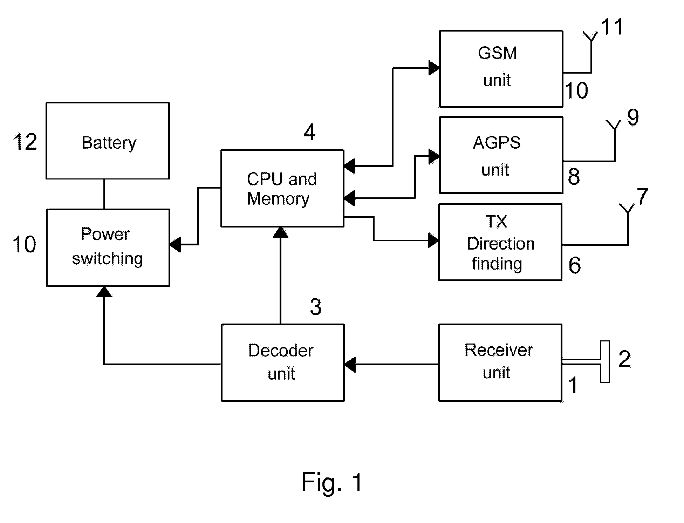

FIG. 1 illustrates in a simplified block diagram an illustrative embodiment a transponder device for utilizing the present method and system. The device may for instance be a modified C-TRACK equipment mentioned in the background. The transponder device is based on a low power microprocessor 4, for instance a Mororola MC9S12E128 or MC9S12DP256, which in a halted state will take only a few microamperes from a battery supply 12.

This transponder unit further contains a receiver unit 1, which in the illustrative embodiment is operating with an available paging system, for instance the Minicall system mentioned. The receiver unit 1, for instance a Philips integrated circuit UAA2080H, and a loop antenna 2 tuned to an operating frequency for instance in the 160 to 170 MHz band. A decoder unit 3, for instance a PCF5001H manufactured by Philips, is connected to the receiver unit, in the case of the illustrative embodiment, to decode the POCSAG signaling standard used. The decoder decodes incoming Receiver Identity Codes to check if satellite positioning information data by means of a second RIC is being transferred to the idling transponder unit within a defined geographic area or if a direct command to the individual transponder is being sent by means of a first unique individual RIC, or by a third RIC for an immediate alarm and activation of a group of transponder units.

The microprocessor handles signals from the decoder via an Interrupt Request line (IRQ), that is activated if the decoder receives any of the acknowledged Receiver Identity Codes and acts according to its software programming and according to the type of RIC message received. In the case of a second type RIC information, data received will be stored by the microprocessor in a memory for a later transfer to an AGPS unit 8 if the transponder unit is activated by an alarm command, for example the first or third RIC.

When the transponder is activated the microprocessor 4 will also activate a direction finding transmitter 6 with its separate antenna 7 operating at a selected frequency range enabling for instance possibilities to detect the transponder by means of a helicopter. The microprocessor also transfers saved satellite information data for the particular geographic area to the AGPS unit 8, provided with a suitable antenna 9. For the AGPS unit 8 could be used for instance an iTRAX02 module from FastraX Ltd., Espoo, Finland or a Motorola 'Phoenix' Single Chip GPS Solution (MG4xOO) or the combination of a GL20000 module and a low noise amplifier GL-LN22 from Global Locate, Inc. NJ, USA. By using the transferred satellite information, the AGPS unit 8 will be able to more quickly lock to the current available positioning satellites to thereby obtain a valid position fix. According to the state of the art, this position fix is then transferred back to the microprocessor, which in the illustrative embodiment initializes a GSM unit 10, using for instance the WISMO-PAC P5186 or a WISMO-QUIK module produced by Wavecom, France. The GSM device, by transmitting over its antenna 11, can alert a selected central of the activation of the transponder and as well as present position via a standard mobile telephone network. The antennas 2, 7, 9 and 11 are generally integrated within the transponder device 20.

The transponder device is powered by means of a battery 12, typically delivering 3 Volts. Furthermore, a step-up circuitry may be used if the microprocessor for instance needs a 5 Volts supply, as the Motorola MC9S12DP256 mentioned. A power switching circuitry controlled by the microprocessor will further control supply of power to the different units of the transponder. All necessary software will be stored within the memory of the microprocessor according to the state of the art. In an idling state with the microprocessor halted units 6, 8 and 10 will not be powered to save current. As the transfer of satellite information to the transponder device only is a one-way system no power-demanding transmitter is necessary for this portion of the system, which means that a transponder device will be able to passively operate for a long period of time with a small standard battery.

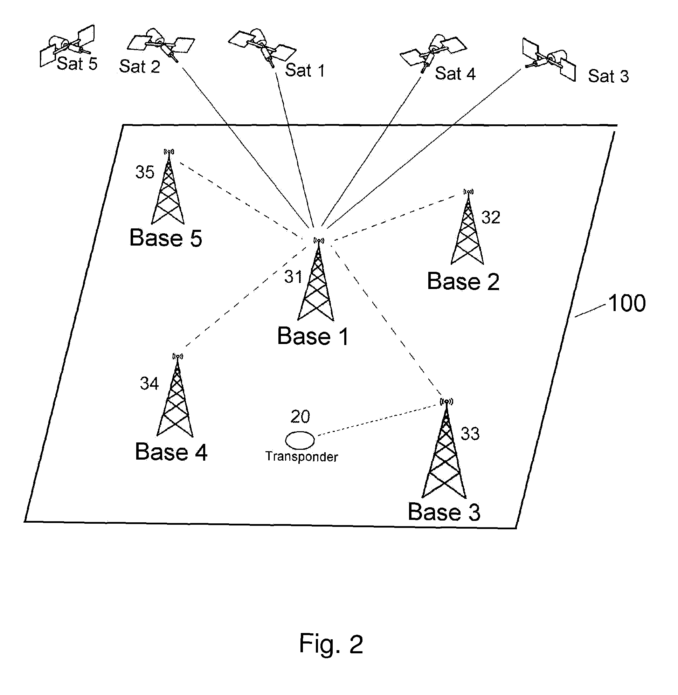

FIG. 2 illustrates an embodiment of the system for a geographic area 100 housing five base stations 31 to 35 serving the present paging system. A central base station for instance 31 also is equipped with a receiving facility for the GPS satellites. As illustrated at least the closest four satellites will be noted by the base station 31 provided with a GPS receiver. Received information of these four satellites can also be forwarded by this network to other base stations within the geographic area 100. The transponder 20, being closest to base station 33, generally will receive satellite information from base 33 via the second RIC address. When activated the transponder 20 in this way will be able to more quickly obtain a position fix, which then via a separate independent communication system can forward its position for a quick tracing of the unit, in this illustrative case a GSM mobile phone network.

The transponder system, in a preferred embodiment, may for further control be equipped with a local low power transmitter device positioned near to the transponder. This transmitter device can by using the third RIC address immediately activate the transponder device. This may take place either by means of pressing a button of an alarm unit carrying the low power transmitter or that the transponder is moved out of a surveillance area.

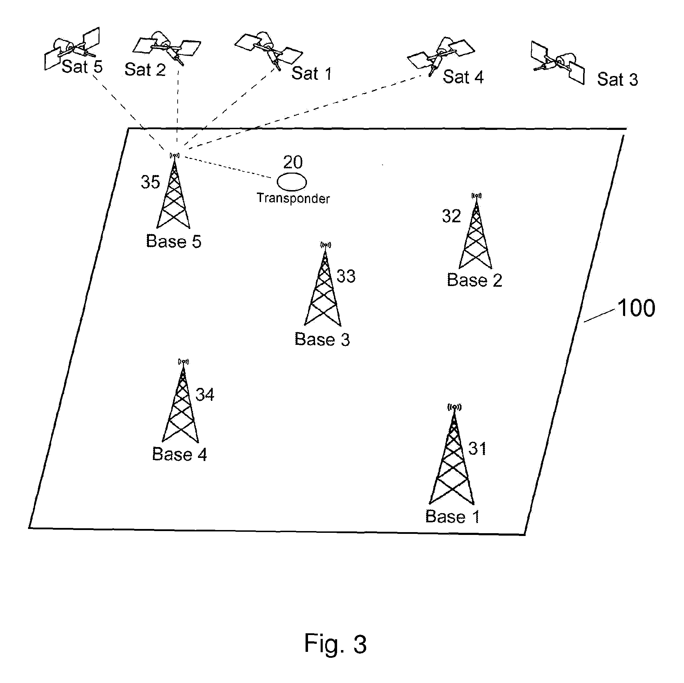

FIG. 3 illustrates a second embodiment of the paging system utilized for the regular updating of the transponder 20 regarding GPS satellites for the assisted global positioning function. In this embodiment each base station in a group 100 is equipped with its own receiver utility for the GPS satellites and the base being nearest to the transponder 20 will generally be supplying the idling system of the transponder system with current GPS information.

The benefit of the method and system is the simplicity to implement the function as it only implies a minor software add-on of the general pager system, and either a GPS receiver at each base station or only a number of GPS receivers at selected sites. The pager network service is still the same as the ordinary service of the paging system and the satellite information sent for particular transducers need to be sent only, for instance, every tenth minute at the most, when that kind of service has been requested to be performed by the paging system. Such a request is simply performed by a regular telephone call using necessary user commands and password. Thus, the main hardware needed for the method and system is found in the particular transducer and the additional service for the tracking system will be handled identically as the normal paging service.

The software add-on to the paging system just involves receiving and converting data from the GPS system into a format suitable for a transfer via the paging network system. For instance, the POCSAG format mentioned above is well suited for this particular transfer of repeated information.

It will be understood by those skilled in the art that various modifications and changes may be made to the present invention without departure from the scope thereof, which is defined by the appended claims.

**Claims**

1. A method for a tracking system which combines a general one-way broadcast system and a satellite positioning system for increased positioning receiver signal sensitivity, **characterized by** the steps of:

   utilizing an adapted receiver unit (1) for the general one-way broadcast system, which comprises a number of base stations generally transmitting information to paging receiver units, whereby each adapted receiver uses at least two receiver identities for the communication;
   defining a geographic area (100) representing a group of base stations, which are in reach of same four positioning satellites for obtaining a position fix within the geographic area by means of the satellite positioning system;
   providing at least one base station within the group (100) of base stations with a satellite positioning receiver device;
   using an individual first receiver identity for each adapted receiver unit (1) for defining an operational mode for the adapted receiver,
   using for the adapted receiver unit (1) a common second receiver identity, separate from an individual first receiver identity for each adapted receiver unit (1) for broadcasting, within the geographic area via at least one base station of the group of base stations, information of positioning satellites currently valid for the defined geographic area by using the second receiver identity;
   receiving passively via the adapted receiver unit (1) within the geographic area (100) information of positioning satellites received by a satellite positioning device within the defined geographic area.

2. The method according to claim 1, **characterized by** the further step of:

   storing into a memory (4) at least a latest information of positioning satellite information received from a base station within the group of base stations of the actual geographic area by means of the second receiver identity when the adapted receiver unit (1) has been set to such a mode of operation.

3. The method according to claim 1, **characterized by** the further step of:

   using for the adapted receiver (1) a POCSAG protocol for transferring Receiver Identity Codes and data information, thereby providing at least two Receiver Identity Codes for the broadcast communication to the adapted receiver device (1) to define functions different from a standard paging system mode, these functions being identified by at least one Receiver Identity Code separate from the individual first Receiver Identity Code.

4. The method according to claim 1, **characterized by** the further step of:

   using a common third receiver identity by means of a local low power transmitter system to via the adapted receiver device (1) activate a transponder (20) carrying the adapted receiver device and additional circuits to thereby initiate a local positioning of the transponder (20), the additional circuits being assisted by satellite positioning data passively received and stored by the transponder (20) via the adapted receiver device (1).

5. The method according to claim 1, **characterized by** the further step of:

   activating by means of a standardized telephone or computer message to a network central a system of local base stations to forward satellite information to the adapted receiver units (1).

6. A system for a tracking system, which combines a general one-way broadcast system and a satellite positioning system for increased positioning receiver signal sensitivity, **characterized in**

   an adapted receiver unit (1) for the one-way broadcast system comprising a number of base stations generally transmitting raging information to adapted receivers, each adapted receiver using at least two receiver identities;
   an individual first receiver identity for each adapted receiver unit (1) is used for defining an operational mode for the adapted receiver.

that at least one base station of a group of base stations in a defined geographic area is provided with a receiver device for a positioning satellite system, which group of base stations receive at least same four positioning satellites for obtaining a position fix;

a common second receiver identity, separate from a first individual receiver identity for each receiver unit, is used to within the group of base stations broadcast information of positioning satellites currently valid for the group of base stations by using the second receiver identity, whereby the adapted receiver unit (1), passively, by means of the common second receiver identity, receives information of positioning satellites valid for the defined geographic area housing the group of base stations.

7. The system according to claim 6, **characterized in that**

at least a latest information of positioning satellite information passively received from the at least one base station within the group of base stations is stored in a memory (4) when the adapted receiver unit (1) has been set to such a mode of operation.

8. The system according to claim 6, **characterized in that**

the adapted receiver unit (1) is using a POCSAG protocol for transferring Receiver Identity Code and data information, and thereby providing at least a first, a second and a third Receiver Identity Code for a one-way communication to the adapted receiver unit (1) using functions different from a standard paging mode and identified by a separate Receiver Identity Code.

9. The system according to claim 8, **characterized in that**

a commonly defined third receiver identity is used to locally via the adapted receiver unit activate a transponder device (20) and its additional circuits to thereby initiate a local geographic position fix to be taken for the transponder (20) using stored data received by the adapted receiver unit (1).

10. The system according to claim 6, **characterized in that**

the group of base stations is activated to forward satellite information to the adapted receiver units by means of an standardized telephone or computer message to a central for the one-way communication network.

Fig. 1

Fig. 2

Fig. 3

**European Patent Office**

**EUROPEAN SEARCH REPORT**

Application Number

EP 04 10 1421

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | EP 0 889 657 A (SEIKO EPSON CORP) 7 January 1999 (1999-01-07)<br>* column 1, line 37-582 *<br>* column 2, line 40-47 *<br>* column 3, line 3-54 *<br>* column 16, line 27 - column 20, line 52 *<br>* column 21, line 43 - column 23, line 1 *<br>* column 24, line 24-30 *<br>* column 25, line 28 - column 27, line 40 *<br>* column 48, line 23 - column 49, line 54 *<br>* claims 20,22,24,37; figure 7 *<br>--- | 1,3-6, 8-10<br><br>2,7 | H04Q7/14 |
| Y | US 6 285 315 B1 (PRATT ANTHONY RICHARD) 4 September 2001 (2001-09-04)<br>* abstract *<br>* column 2, line 20 - column 3, line 67 *<br>* column 5, line 51-55; figure 1 *<br>--- | 2,7 | |
| A,D | US 6 236 836 B1 (NARHI ANNE ET AL) 22 May 2001 (2001-05-22)<br>* column 3, line 56 - column 6, line 59 *<br>----- | 1-10 | TECHNICAL FIELDS SEARCHED (Int.Cl.7)<br><br>H04Q<br>G01S |

The present search report has been drawn up for all claims

| Place of search | Date of completion of the search | Examiner |
|---|---|---|
| MUNICH | 8 July 2004 | Isopescu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 10 1421

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2004

| Patent document cited in search report | | Publication date | Patent family member(s) | | Publication date |
|---|---|---|---|---|---|
| EP 0889657 | A | 07-01-1999 | JP | 11027733 A | 29-01-1999 |
| | | | JP | 11041639 A | 12-02-1999 |
| | | | EP | 0889657 A2 | 07-01-1999 |
| | | | US | 2001045886 A1 | 29-11-2001 |
| US 6285315 | B1 | 04-09-2001 | GB | 2347035 A | 23-08-2000 |
| US 6236836 | B1 | 22-05-2001 | SE | 470241 B | 13-12-1993 |
| | | | AU | 4098193 A | 13-12-1993 |
| | | | CA | 2134754 A1 | 25-11-1993 |
| | | | EP | 0641449 A1 | 08-03-1995 |
| | | | JP | 3270050 B2 | 02-04-2002 |
| | | | JP | 7506673 T | 20-07-1995 |
| | | | SE | 9201481 A | 12-11-1993 |
| | | | WO | 9323766 A1 | 25-11-1993 |